# EUROPEAN PATENT SPECIFICATION

(11) **EP 3 472 675 B1**
(45) Date of publication and mention of the grant of the patent: **13.04.2022**
(21) Application number: 16905046.5
(22) Date of filing: 16.06.2016
(51) Int. Cl.: G06F 11/20, H04L 29/14

(54) **HARDWARE ASSIST MECHANISMS FOR ALIVE DETECTION OF REDUNDANT DEVICES**
HARDWARE-UNTERSTÜTZUNGSMECHANISMEN FÜR LEBENDEN NACHWEIS VON REDUNDANTEN VORRICHTUNGEN
MÉCANISMES D'ASSISTANCE PAR MATÉRIEL POUR LA DÉTECTION DE MAINTIEN DE CONNEXION DE DISPOSITIFS REDONDANTS

(43) Date of publication of application: 24.04.2019
(73) Proprietor: Honeywell International Inc., Morris Plains, NJ 07950 (US)
(72) Inventor: SWANSON, Norman R., Morris Plains New Jersey 07950 (US); FELIX, Joseph P., Morris Plains New Jersey 07950 (US); BANDEKAR, Raj, Morris Plains New Jersey 07950 (US); CARNEY, Michael D., Morris Plains New Jersey 07950 (US); YANG, Zhi, Morris Plains New Jersey 07950 (US)
(74) Representative: Houghton, Mark Phillip
(86) International application number: PCT/CN2016/086021
(87) International publication number: WO 2017/214931

(56) References cited:
- CN-A- 1 585 500
- CN-A- 101 131 570
- CN-A- 101 510 081
- CN-Y- 201 130 309
- JP-A- 2003 218 744
- US-A- 5 404 356
- US-A1- 2003 061 537
- US-B1- 6 643 795

## Description

### TECHNICAL FIELD

This disclosure relates generally to the use of redundant devices in industrial process control and automation systems and other systems. More specifically, this disclosure relates to hardware assist mechanisms for alive detection of redundant devices.

### BACKGROUND

Industrial process control and automation systems are often used to automate large and complex industrial processes. These types of systems routinely include sensors, actuators, and controllers. Some of the controllers receive measurements from the sensors and generate control signals for the actuators. Other controllers perform higher-level functions, such as planning, scheduling, and optimization operations.

Equipment redundancy and fault tolerance are often desired in an industrial process control and automation system. For example, controllers that receive sensor measurements and generate actuator control signals are often arranged in redundant pairs. One controller in a redundant pair typically operates in a primary mode and actively controls an industrial process (or portion thereof). Another controller in the redundant pair typically operates in a backup or secondary mode and, upon a fault or other problem with the primary controller, transitions to the primary mode.

US6643795 discloses a data replication system having a redundant configuration including dual Fiber Channel fabric links interconnecting each of the components of two data storage sites, wherein each site comprises a host computer and associated data storage array, with redundant array controllers and adapters. The system includes the capability of simultaneous bi-directional remote data replication which permits the system to operate in an 'extended cluster' mode, as if each of the remote storage arrays were local relative to the respective remote host. The system further includes the concept of'home' and 'alternate' storage nodes, which provide for automatic node failover from a primary to a designated alternate node, without necessitating rebooting of the remote node. Write data transfers are potentially host retry-able at both sites; upon failure of controllers at one site, the host re-issues the same write on other site.

US20030061537A1 discloses a parallel logging and recovery scheme for highly available main-memory database systems. Parallel redo-only logging ("PROL") combines physical logging and selective replay of redo-only log records. During physical logging, log records are generated with an update sequence number representing the sequence of database update. The log records are replayed selectively during recovery based on the update sequence number. Since the order of replaying log records doesn't matter in physical logging, PROL makes parallel operations possible. Since the physical logging does not depend on the state of the object to which the log records are applied, the present invention also makes it easy to construct a log-based hot standby system.

### SUMMARY

The present invention is set out in the independent claims.

This disclosure provides hardware assist mechanisms for alive detection of redundant devices.

In particular embodiments, the second device includes the second hardware assist device and at least one second processing device. The second hardware assist device includes at least one second transmitter configured to transmit the at least one second signal to the first hardware assist device. The second hardware assist device also includes at least one second receiver configured to receive the at least one first signal also includes at least one second receiver configured to receive the at least one first signal from the first hardware assist device. The second hardware assist device further includes a second timer configured to control a second driver in order to block transmission of the at least one second signal in response to a fault associated with the second device. The at least one second processing device is configured to perform one or more actions in response to a loss of the at least one first signal from the first device.

In a third embodiment, a method includes, at a first hardware assist device associated with a first apparatus, transmitting at least one first signal to a second hardware assist device of a redundant second apparatus. The at least one first signal indicates to the second hardware assist device that the first apparatus is functional. The method also includes, at the first hardware assist device associated with the first apparatus, receiving at least one second signal from the second hardware assist device. The at least one second signal indicates to the first hardware assist device that the second apparatus is functional. The method further includes, at the first hardware assist device associated with the first apparatus, controlling a driver in order to block transmission of the at least one first signal in response to a fault associated with the first apparatus. In addition, the method includes performing one or more first actions in response to a loss of the at least one second signal from the second apparatus.

In particular embodiments, the method also includes, at the second hardware assist device, transmitting the at least one second signal to the first hardware assist device, receiving the at least one first signal from the first hardware assist device, and controlling a second driver in order to block transmission of the at least one second signal in response to a fault associated with the second apparatus. The method further includes performing one or more second actions in response to a loss of the at least one first signal from the first apparatus.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURES 2A and 2B illustrate example systems with redundant devices supporting hardware assist mechanisms for alive detection according to this disclosure;
FIGURES 3A and 3B illustrate example signaling between hardware assist mechanisms for alive detection according to this disclosure;
FIGURES 4 and 5 illustrate example hardware assist mechanisms for alive detection of redundant devices according to this disclosure;
FIGURE 6 illustrates an example communication protocol used by a hardware assist mechanism for alive detection according to this disclosure; and
FIGURE 7 illustrates an example method for alive detection using a hardware assist mechanism according to this disclosure.

### DETAILED DESCRIPTION

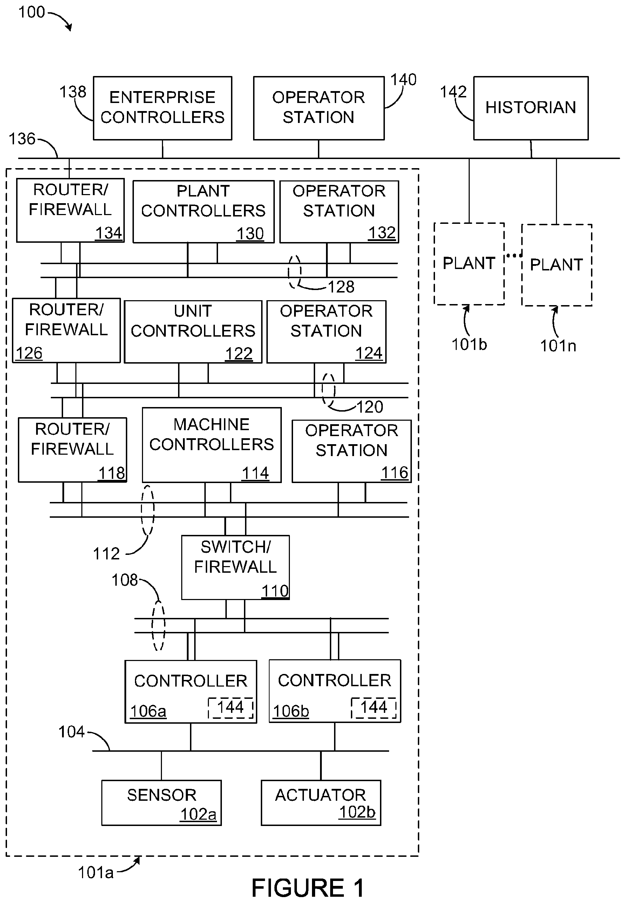

FIGURES 1 through 7, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

It is often necessary or desirable to provide redundant components in an industrial process control and automation system or other system. For example, pairs of redundant process controllers could be used in an industrial process control and automation system to provide more reliable process control operations in the system. In some instances, it may be necessary or desirable for each device in a redundant pair to detect if the other device in the redundant pair is active and functioning correctly. This allows a device functioning in a backup or secondary mode to transition into a primary mode under appropriate circumstances. This also allows a device functioning in the primary mode to identify a fault or other problem with a device operating in the secondary mode and to generate a warning that redundancy is no longer available.

The ability of one device to detect if another device is available may be referred to as "alive detection." Each device in a redundant pair could perform alive detection to verify whether the other device in the redundant pair is active and available. In some conventional approaches, each device relies on a communication timeout to detect the absence of a redundant device. Communication timeouts typically occur after a prolonged period without communication from a redundant device, such as about 500 or 600 milliseconds. This may not be suitable for industrial process control and automation systems or other systems where redundant devices need to assume a primary mode more quickly, such as within about 10 or 20 milliseconds.

Also, in some conventional approaches, it is difficult to distinguish between a fault in a communication path between redundant devices and an absence of a redundant device due to a fault with the redundant device. The absence of a redundant device could be due to a number of reasons, such as user removal of the redundant device from service, a hardware fault, or a power loss. If a primary device becomes absent, a secondary device should transition into the primary mode in order to compensate for the loss of the primary device. However, when a fault in a communication path between redundant devices occurs, signals cannot be transported between the redundant devices. The primary device may still be operating correctly, but the secondary device may be unable to determine if the primary device is active. In those cases, it may not be desirable to have the secondary device transition into the primary mode since there would then be two devices operating in the primary mode. If that occurs with process controllers, for example, the process controllers could interfere with each other's operations.

This disclosure provides various hardware assist mechanisms for alive detection of redundant devices. The hardware assist mechanisms facilitate faster detection of a missing or unavailable redundant device. Among other things, this allows a secondary device to transition into a primary mode more quickly. Moreover, the hardware assist mechanisms could provide support for redundant signaling between redundant devices, reducing the likelihood that a single communication path fault will prevent the redundant devices from detecting one another.

FIGURE 1 illustrates an example industrial process control and automation system 100 according to this disclosure. As shown in FIGURE 1, the system 100 includes various components that facilitate production or processing of at least one product or other material. For instance, the system 100 is used here to facilitate control over components in one or multiple industrial plants 101a-101n. Each plant 101a-101n represents one or more processing facilities (or one or more portions thereof), such as one or more manufacturing facilities for producing at least one product or other material. In general, each plant 101a-101n may implement one or more processes and can individually or collectively be referred to as a process system. A process system generally represents any system or portion thereof configured to process one or more products or other materials in some manner.

In FIGURE 1, the system 100 is implemented using the Purdue model of process control. In the Purdue model, "Level 0" may include one or more sensors 102a and one or more actuators 102b. The sensors 102a and actuators 102b represent components in a process system that may perform any of a wide variety of functions. For example, the sensors 102a could measure a wide variety of characteristics in the process system, such as temperature, pressure, or flow rate. Also, the actuators 102b could alter a wide variety of characteristics in the process system. The sensors 102a and actuators 102b could represent any other or additional components in any suitable process system. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s).

In the Purdue model, "Level 1" may include controllers 106a-106b, which are coupled to the network 104. Among other things, each of the controllers 106a-106b may use the measurements from one or more sensors 102a to control the operation of one or more actuators 102b. For example, each controller 106a-106b could receive measurement data from one or more sensors 102a and use the measurement data to generate control signals for one or more actuators 102b. Each controller 106a-106b includes any suitable structure for interacting with one or more sensors 102a and controlling one or more actuators 102b. Each controller 106a-106b could, for example, represent a multivariable controller, such as a Robust Multivariable Predictive Control Technology (RMPCT) controller or other type of controller implementing model predictive control (MPC) or other advanced predictive control (APC). As a particular example, each controller 106a-106b could represent a computing device running a real-time operating system.

Two networks 108 are coupled to the controllers 106a-106b. The networks 108 facilitate interaction with the controllers 106a-106b, such as by transporting data to and from the controllers 106a-106b. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as a pair of Ethernet networks or an FTE network.

In the Purdue model, "Level 2" may include one or more machine-level controllers 114 coupled to the networks 112. The machine-level controllers 114 perform various functions to support the operation and control of the controllers 106a-106b, sensors 102a, and actuators 102b, which could be associated with a particular piece of industrial equipment (such as a boiler or other machine). For example, the machine-level controllers 114 could log information collected or generated by the controllers 106a-106b, such as measurement data from the sensors 102a or control signals for the actuators 102b. The machine-level controllers 114 could also execute applications that control the operation of the controllers 106a-106b, thereby controlling the operation of the actuators 102b. In addition, the machine-level controllers 114 could provide secure access to the controllers 106a-106b. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106a-106b, sensors 102a, and actuators 102b).

One or more operator stations 116 are coupled to the networks 112. The operator stations 116 represent computing or communication devices providing user access to the machine-level controllers 114, which could then provide user access to the controllers 106a-106b (and possibly the sensors 102a and actuators 102b). As particular examples, the operator stations 116 could allow users to review the operational history of the sensors 102a and actuators 102b using information collected by the controllers 106a-106b and/or the machine-level controllers 114. The operator stations 116 could also allow the users to adjust the operation of the sensors 102a, actuators 102b, controllers 106a-106b, or machine-level controllers 114. In addition, the operator stations 116 could receive and display warnings, alerts, or other messages or displays generated by the controllers 106a-106b or the machine-level controllers 114. Each of the operator stations 116 includes any suitable structure for supporting user access and control of one or more components in the system 100. Each of the operator stations 116 could, for example, represent a computing device running a MICROSOFT WINDOWS operating system.

At least one switch/firewall 118 couples the networks 112 to two networks 120. The switch/firewall 118 includes any suitable structure for providing communication between networks, such as a secure switch or combination switch/ firewall. The networks 120 could represent any suitable networks, such as a pair of Ethernet networks or an FTE network.

In the Purdue model, "Level 3" may include one or more unit-level controllers 122 coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Although not shown, different unit-level controllers 122 could be used to control different units in a process system (where each unit is associated with one or more machine-level controllers 114, controllers 106a-106b, sensors 102a, and actuators 102b).

Access to the unit-level controllers 122 may be provided by one or more operator stations 124. Each of the operator stations 124 includes any suitable structure for supporting user access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as a pair of Ethernet networks or an FTE network.

In the Purdue model, "Level 4" may include one or more plant-level controllers 130 coupled to the networks 128. Each plant-level controller 130 is typically associated with one of the plants 101a-101n, which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting user access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 5" may include one or more enterprise-level controllers 138 coupled to the network 136. Each enterprise-level controller 138 is typically able to perform planning operations for multiple plants 101a-101n and to control various aspects of the plants 101a-101n. The enterprise-level controllers 138 can also perform various functions to support the operation and control of components in the plants 101a-101n. As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101a is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting user access and control of one or more components in the system 100. Each of the operator stations 140 could, for example, represent a computing device running a MICROSOFT WINDOWS operating system.

Various levels of the Purdue model can include other components, such as one or more databases. The database(s) associated with each level could store any suitable information associated with that level or one or more other levels of the system 100. For example, a historian 142 can be coupled to the network 136. The historian 142 could represent a component that stores various information about the system 100. The historian 142 could, for instance, store information used during production scheduling and optimization. The historian 142 represents any suitable structure for storing and facilitating retrieval of information. Although shown as a single centralized component coupled to the network 136, the historian 142 could be located elsewhere in the system 100, or multiple historians could be distributed in different locations in the system 100.

In particular embodiments, the various controllers and operator stations in FIGURE 1 may represent computing devices. For example, each of the controllers and operator stations could include one or more processing devices and one or more memories for storing instructions and data used, generated, or collected by the processing device(s). Each of the controllers and operator stations could also include at least one network interface, such as one or more Ethernet interfaces or wireless transceivers.

Various components in the system 100 could be arranged in a redundant configuration. For example, the controllers 106a-106b could operate in a redundant configuration, such as when one controller 106a operates as a primary controller while another controller 106b operates as a backup controller. The backup controller can synchronize with the primary controller and can take over for the primary controller in the event of a fault or other problem with the primary controller. To support alive detection for redundant devices, each of the controllers 106a-106b could include a hardware assist device 144, which can be used at each controller 106a-106b to detect the presence of the other controller 106a-106b. Different implementations of the hardware assist device 144 are described below. Note that while shown here as being used in redundant process controllers, hardware assist devices 144 could be used in any other suitable redundant devices, and those redundant devices need not be used for process control or automation.

Although FIGURE 1 illustrates one example of an industrial process control and automation system 100, various changes may be made to FIGURE 1. For example, a control system could include any number of sensors, actuators, controllers, servers, operator stations, networks, and hardware assist devices. Also, the makeup and arrangement of the system 100 in FIGURE 1 is for illustration only. Components could be added, omitted, combined, or placed in any other suitable configuration according to particular needs. Further, particular functions have been described as being performed by particular components of the system 100. This is for illustration only. In general, process control systems are highly configurable and can be configured in any suitable manner according to particular needs. In addition, while FIGURE 1 illustrates one example environment in which a hardware assist mechanism for alive detection can be used, this functionality can be used in any other suitable device or system (whether or not that device or system is used for process control and automation).

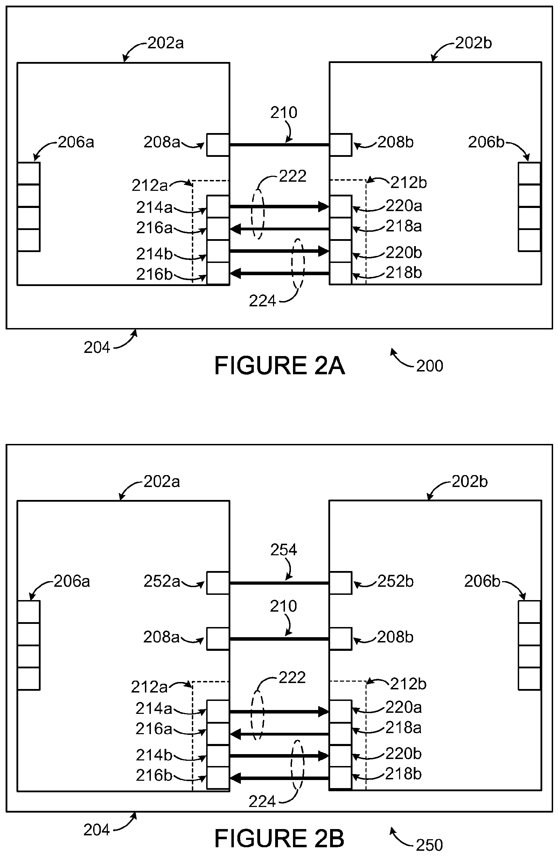

FIGURES 2A and 2B illustrate example systems 200 and 250 with redundant devices supporting hardware assist mechanisms for alive detection according to this disclosure. The redundant devices shown here could denote the process controllers 106a-106b in the system 100 of FIGURE 1. However, the redundant devices could denote any other suitable redundant devices in any suitable system.

In FIGURE 2A, redundant devices 202a-202b denote any suitable redundant devices that perform any desired functionality in a system. For example, the redundant devices 202a-202b could denote redundant programmable logic controllers (PLCs) or other process controllers or redundant remote terminal units (RTUs) (also sometimes referred to as remote telemetry units). The redundant devices 202a-202b could reside in a common structure, such as when the redundant devices 202a-202b are connected to different slots of a common backplane 204. Alternatively, the redundant devices 202a-202b could be separated from one another by more significant distance.

Each device 202a-202b includes one or more communication interfaces 206a-206b, respectively. The communication interfaces 206a-206b support communications with one or more external devices or systems. For example, the communication interfaces 206a-206b could allow the devices 202a-202b to transmit or receive data over one or more external networks or communication links. Each communication interface 206a-206b includes any suitable structure configured to transmit or receive information, such as a 10/100/1000 Ethernet interface. While four communication interfaces 206a-206b are shown in each device 202a-202b, each device 202a-202b could include any suitable number of communication interfaces 206a-206b.

Each device 202a-202b also includes an additional communication interface 208a-208b, respectively. The communication interfaces 208a-208b support the transport of data between the devices 202a-202b, such as data used to synchronize one device in the secondary mode with another device in the primary mode. Each communication interface 208a-208b includes any suitable structure configured to transmit or receive information, such as a 10/100/1000 Ethernet interface. While a single communication interface 208a-208b is shown in each device 202a-202b, each device 202a-202b could include any suitable number of communication interfaces 208a-208b. At least one communication link 210 couples the communication interfaces 208a-208b. The communication link 210 denotes any suitable communication medium, such as a communication link embedded within the backplane 204.

Each device 202a-202b further includes a hardware assist device 212a-212b, respectively. The hardware assist devices 212a-212b denote hardware components used to facilitate faster identification of the loss of a redundant device. For example, as described in more detail below, the hardware assist devices 212a-212b can transmit signals to one another during normal operation. Upon a fault or other problem with a first device 202a-202b, the hardware assist device 212a-212b in a second device 202a-202b can detect the lack of signals from the hardware assist device in the first device. This can occur very quickly, typically much faster than waiting for a communication timeout associated with the communication interfaces 208a-208b.

The hardware assist device 212a includes one or more "alive" transmitters 214a-214b and one or more "alive" receivers 216a-216b. Similarly, the hardware assist device 212b includes one or more "alive" transmitters 218a-218b and one or more "alive" receivers 220a-220b. Each transmitter 214a-214b, 218a-218b in one device 202a-202b can transmit one or more signals to a corresponding receiver 216a-216b, 220a-220b in the other device 202a-202b. The presence of these signals can be used by each device 202a-202b as an indication that the other device 202a-202b is active and operating as expected. The absence of these signals can be used by each device 202a-202b as an indication that the other device 202a-202b has experienced some type of problem.

Each transmitter 214a-214b, 218a-218b includes any suitable structure for transmitting one or more signals. Each receiver 216a-216b, 220a-220b includes any suitable structure for receiving one or more signals. In some embodiments, a transmitter and a receiver could be combined into a single transceiver. In particular embodiments, each transmitter-receiver pair in a hardware assist device 212a-212b could be implemented using a Universal Asynchronous Receiver/Transmitter (UART) engine.

In this example, there is redundancy in the communications between the hardware assist devices 212a-212b. Namely, there are two transmitters and two receivers in each hardware assist device 212a-212b. The transmitters 214a, 218a and the receivers 216a, 220a communicate over one or more first communication links 222, and the transmitters 214b, 218b and the receivers 216b, 220b communicate over one or more second communication links 224. Each of the communication links 222-224 denotes any suitable communication medium. In some embodiments, the communication links 222-224 could be embedded within the backplane 204. However, there need not be redundancy in the communications between the hardware assist devices 212a-212b, and each hardware assist device 212a-212b could include a single alive transmitter and a single alive receiver.

It is also possible to include one or more additional interfaces between the redundant devices 202a-202b. FIGURE 2B illustrates an example in which each redundant device 202a-202b includes an additional interface 252a-252b, respectively, which are coupled by a communication link 254. The additional interfaces 252a-252b could be used to transport any suitable data between the redundant devices 202a-202b. In some embodiments, the additional interfaces 252a-252b could be used to transport signals indicating which device 202a-202b is or will be operating in the primary mode and which device 202a-202b is or will be operating in the secondary mode. Each additional interface 252a-252b includes any suitable structure configured to transmit or receive information, such as a UART interface.

Although FIGURES 2A and 2B illustrate examples of systems 200 and 250 with redundant devices 202a-202b supporting hardware assist mechanisms 212a-212b for alive detection, various changes may be made to FIGURES 2A and 2B. For example, the hardware assist devices 212a-212b could be used in any other suitable devices having any other or additional structural components. Also, a set of redundant devices could include more than two devices, in which case a hardware assist mechanism 212a-212b could communicate with more than one other device.

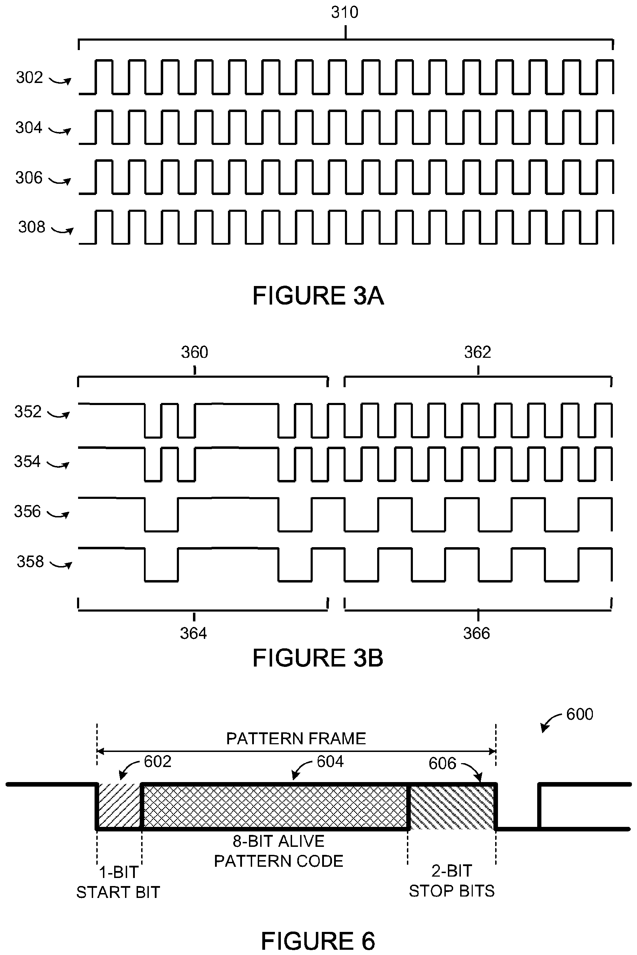

FIGURES 3A and 3B illustrate example signaling between hardware assist mechanisms for alive detection according to this disclosure. For ease of explanation, FIGURES 3A and 3B are described as illustrating example signaling that could be sent between the hardware assist devices 212a-212b in the systems 200 and 250 of FIGURES 2A and 2B.

As shown in FIGURE 3A, four signals 302-308 are sent between the hardware assist devices 212a-212b. For example, the signals 302 and 304 could be sent by the transmitters 214a-214b, and the signals 306 and 308 could be sent by the transmitters 218a-218b. As noted above, however, only two signals (such as signals 302 and 306) may be sent between the hardware assist devices 212a-212b if redundant communication paths are not used between the hardware assist devices 212a-212b. In this example, each signal 302-308 is merely meant to indicate that one device is currently active and available, so each signal 302-308 could have the same pattern 310. The receipt of a signal 302-308 is indicative that a device is currently active and available, while the absence of a signal 302-308 is indicative that a device may not be currently active or available In some embodiments with redundant communication paths, only one of multiple signals sent from a first device 202a-202b may need to be received by a second device 202a-202b to ensure proper identification of the first device's status.

In particular embodiments, the signaling pattern shown in FIGURE 3A could be used in the system 250 of FIGURE 2B or other systems where identical signals can be used. In FIGURE 2B, there are multiple communication paths that could be used by the devices 202a-202b to exchange information about their modes (namely via the communication interfaces 208a-208b and 252a-252b). The alive signals need not be modulated with different patterns to overload the alive signals in order to exchange information about the devices' modes because there are alternate interfaces that can be used to exchange mode information. However, while the same pattern 310 is used in each signal 302-308 here, this need not be the case, and any suitable pattern could be used for each signal 302-308.

As shown in FIGURE 3B, four signals 352-358 are again sent between the hardware assist devices 212a-212b. For example, the signals 352 and 354 could be sent by the transmitters 214a-214b, and the signals 356 and 358 could be sent by the transmitters 218a-218b. Again, however, only two signals (such as signals 352 and 356) may be sent between the hardware assist devices 212a-212b if redundant communication paths are not used. In this example, each signal 352-358 indicates that one device is currently active and available. The receipt of a signal 352-358 is indicative that a device is currently active and available, while the absence of a signal 352-358 is indicative that a device may not be currently active or available. In some embodiments with redundant communication paths, only one of multiple signals sent from a first device 202a-202b may need to be received by a second device 202a-202b to ensure proper identification of the first device's status.

Each signal 352-358 also conveys additional information, such as the mode of operation in which each device 202a-202b would like to operate or is operating. For example, a pattern 360 could be used by a device 202a-202b to indicate that the device is preparing to enter the primary mode, while a pattern 362 could be used by a device 202a-202b to indicate that the device is operating in the primary mode. Similarly, a pattern 364 could be used by a device 202a-202b to indicate that the device is preparing to enter the secondary mode, while a pattern 366 could be used by a device 202a-202b to indicate that the device is operating in the secondary mode.

In some embodiments, the signaling pattern shown in FIGURE 3B could be used in the system 200 of FIGURE 2A or other systems where non-identical signals can be used. In FIGURE 2A, there may not be multiple communication paths that could be used by the devices 202a-202b to exchange information about their modes since the communication interfaces 252a-252b are absent. The alive signals can be modulated with different patterns to overload the alive signals in order to exchange information about the devices' modes. The alive signals could therefore be used to exchange mode information even in the presence of a fault on the communication interfaces 208a-208b.

Although FIGURES 3A and 3B illustrate examples of signaling between hardware assist mechanisms for alive detection, various changes may be made to FIGURES 3A and 3B. For example, the specific patterns shown in FIGURES 3A and 3B are for illustration only. Any suitable patterns could be used to convey any suitable information between hardware assist mechanisms or between devices. Also, more or fewer unique signal patterns can be used, depending on the amount of information to be exchanged between devices.

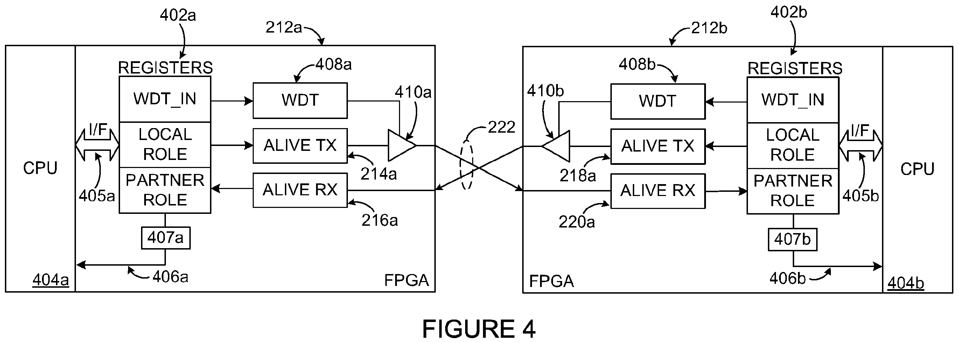

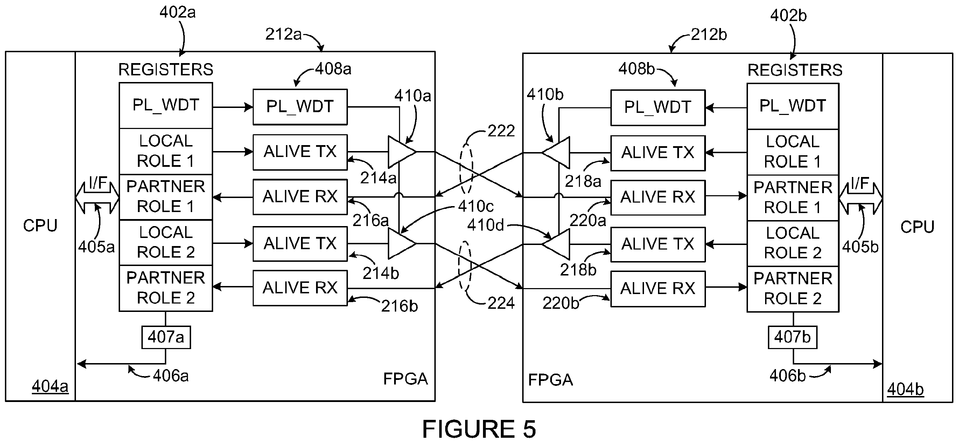

FIGURES 4 and 5 illustrate example hardware assist devices 212a-212b for alive detection of redundant devices according to this disclosure. For ease of explanation, the hardware assist devices 212a-212b shown in FIGURES 4 and 5 are described as being used in the systems 200 and 250 of FIGURES 2A and 2B. However, the hardware assist devices 212a-212b shown in FIGURES 4 and 5 could be used in any suitable devices and systems.

In FIGURE 4, the hardware assist devices 212a-212b do not support redundant communication paths, so only the first communication links 222 are present. The communication links 222 support communications between the transmitters 214a, 218a and the receivers 216a, 220a.

Each hardware assist device 212a-212b includes a memory, such as in the form of a register set 402a-402b. The register sets 402a-402b are accessible by central processing units (CPUs) or other processing devices 404a-404b, respectively. The processing devices 404a-404b could denote processing devices used to execute software or firmware instructions of the devices 202a-202b to perform some desired functionality. Each processing device 404a-404b denotes any suitable processing or computing device(s), such as one or more microprocessors, microcontrollers, digital signal processors, application specific integrated circuits, field programmable gate arrays, or discrete logic devices.

Each register set 402a-402b here stores a "local role" value that defines the role (primary or secondary) of the redundant device 202a-202b associated with the register set 402a-402b. The "local role" values in the register sets 402a and 402b can be used to define or control the alive signals transmitted by the transmitters 214a and 218a, respectively. Each register set 402a-402b also stores a "partner role" value that identifies the role (primary or secondary) of the other device 202a-202b. The "partner role" values in the register sets 402a and 402b can be based on the signals received by the receivers 216a and 220a, respectively.

Interfaces 405a-405b can be used to support access to and from the register sets 402a-402b by the processing devices 404a-404b. Any suitable interfaces 405a-405b can be used in the hardware assist devices 212a-212b. For example, the interfaces 405a-405b could denote interfaces supporting an Advanced eXtensible Interface (AXI) protocol.

Interrupt signals 406a-406b can be generated when the associated "partner role" values in the register sets 402a-402b change, thereby letting the associated processing devices 404a-404b know of the status changes. As a result, each processing device 404a-404b could determine whether to initiate a mode change of the associated device 202a-202b, such as when a secondary device is transitioned to the primary mode in response to detecting a loss of a primary device. Each processing device 404a-404b could also determine whether to generate a notification, such as when a primary device initiates a warning or alarm in response to detecting a loss of a secondary device. The interrupt signals 406a-406b could be generated by logic 407a-407b, which may denote one or more logic gates, program code, or other functionality implemented within the hardware assist devices 212a-212b.

Each register set 402a-402b further stores a watchdog timer input value (WDT_IN), which is used to control a watchdog timer 408a-408b, respectively. The watchdog timers 408a-408b control the operations of drivers 410a-410b, respectively. The drivers 410a-410b can selectively block transmissions from the transmitters 214a, 218a over the communication links 222. For example, each watchdog timer 408a-408b could be regularly reset by the associated processing device 404a-404b (such as by the processing device 404a-404b writing a value to the associated WDT_IN register). As long as each processing device 404a-404b resets its associated watchdog timer 408a-408b, the watchdog timers 408a-408b allow signals from the transmitters 214a, 218a to flow over the communication links 222 through the drivers 410a-410b. If one of the processing devices 404a-404b fails, the processing device stops resetting its watchdog timer 408a or 408b, which then times out and causes the driver 410a or 410b to block signals from the associated transmitter 214a or 218a from flowing over the communication links 222. This allows the watchdog timers 408a-408b to block the transmissions of alive signals when their associated processing devices 404a-404b fail. Moreover, this can be done quickly, such as within about 10 milliseconds in some embodiments.

Note that the watchdog timers 408a-408b could also be controlled in other ways. For example, firmware or software instructions could alter the watchdog timer input values stored in the register sets 402a-402b to disable the transmissions of the alive signals. This could occur, for instance, during an intention shutdown or reboot of a device.

In particular embodiments, each hardware assist device 212a-212b can be implemented using an FPGA, possibly with an associated processing device 404a-404b formed on an integrated circuit chip. For example, devices such as the ZYNQ-7000 family of devices from XILINX INC. can include a programmable FPGA used in conjunction with a multipoint control unit (MCU) or other processing device.

In FIGURE 5, the hardware assist devices 212a-212b support redundant communications, so the first and second communication links 222-224 are present. The first communication links 222 support communications between the transmitters 214a, 218a and the receivers 216a, 220a. The second communication links 224 support communications between the transmitters 214b, 218b and the receivers 216b, 220b.

The register sets 402a-402b in FIGURE 5 have been expanded to store two "local role" values and two "partner role" values. The "local role" values in each register set 402a-402b control the signals transmitted by the transmitters 214a-214b or 218a-218b. However, each device 202a-202b could operate in only a single local role, so each register set 402a-402b could alternatively store a single "local role" value that is shared by multiple transmitters 214a-214b or 218a-218b. The "partner role" values in each register set 402a-402b are based on signals received by the receivers 216a-216b or 220a-220b. In some embodiments, an interrupt signal 406a or 406b could be asserted whenever both "partner role" values in the associated register set 402a-402b indicate that a partner device is absent. The hardware assist devices 212a-212b in FIGURE 5 have also been expanded to include additional drivers 410c-410d, respectively. The drivers 410c-410d control whether transmissions from the transmitters 214b and 218b are allowed to pass onto the second communication links 224.

The remainder of FIGURE 5 is similar in structure to that of FIGURE 4 discussed above. For simplicity, the same watchdog timer 408a-408b in each hardware assist device 212a-212b could be used to control the multiple drivers 410a, 410c or 410b, 410d in that hardware assist device. However, it is also possible to use separate watchdog timers for the separate drivers in each hardware assist device 212a-212b.

In some embodiments, testing the hardware assist devices 212a-212b can occur, such as at a specified interval or at other times. For example, one of the hardware assist devices 212a-212b could intentionally disable its alive transmission over one of the communication links 222 and 224. The other hardware assist device 212a-212b could then determine whether the loss of the alive signal on that communication link is detected (such as by verifying whether one "partner role" value changes while the other "partner role" value does not change). This may allow, for example, verification that each hardware assist device 212a-212b is operating correctly and that the communication links 222-224 are not shorted together. This type of test could occur in one or both directions on each communication link 222-224.

In this way, the hardware assist devices 212a-212b can use the transmitters 214a-214b, 218a-218b to generate alive signals (possibly continuously) in order to indicate to one another that the devices 202a-202b are active and available. In response to a fault or other problem, one or more transmitters 214a-214b or 218a-218b cease to generate alive signals, rapidly providing an immediate and explicit notification that one of the redundant devices 202a-202b has faulted or powered-off. The transmitted alive signals can be dynamic in nature to be immune from short or open faults on the signal paths, and the alive signals can be periodically and individually tested to ensure that there are no latent faults (such as a short across redundant signal paths). As can be seen above, the hardware assist devices 212a-212b can employ "negative logic" in that the transmitted signals may be continuously sent unless and until there is a fault, at which point the transmission(s) can stop.

Although FIGURES 4 and 5 illustrate examples of hardware assist devices 212a-212b for alive detection of redundant devices, various changes may be made to FIGURES 4 and 5. For example, any other suitable hardware components could be used to implement the functions of the hardware assist devices 212a-212b described above. Also, alive transmitters and alive receivers in two hardware assist devices 212a-212b could be configured to share a single communication link, such as when switches are used to reverse the direction of communications over a communication link. In addition, while certain components are shown in FIGURES 4 and 5 as being implemented within FPGAs, various components could also be implemented outside of the FPGAs. For instance, it may be considered a "best practice" to implement a watchdog timer outside of an FPGA, so the watchdog timers 408a-408b could be coupled to the FPGAs.

FIGURE 6 illustrates an example communication protocol used by a hardware assist mechanism for alive detection according to this disclosure. In particular, FIGURE 6 illustrates an example timing diagram 600 for communications between two hardware assist mechanisms, such as hardware assist devices 212a-212b.

As shown in FIGURE 6, the timing diagram 600 defines a repeating pattern frame, where each frame includes at least one start bit 602, a payload 604, and at least one stop bit 606. In this particular example, there is one start bit 602 having a low logic value, an eight-bit payload 604, and two stop bits 606 having a high logic value. At a rate of 115,200 bits per second and a pattern frame size 11 bits, each pattern frame could be transmitted between the hardware assist devices 212a-212b in about 95.5 microseconds.

As noted above, in some embodiments, signals sent between the hardware assist devices 212a-212b could define four patterns. Those patterns could identify whether a device is preparing to enter the primary mode, in the primary mode, preparing to enter the secondary mode, or in the secondary mode. These four patterns can be defined using different bit patterns within the payload 604 of the repeating pattern frame. In particular embodiments, the different bit patterns that could be sent within the payload 604 could be defined as follows.

**Table 1**

| Bit Pattern Code | Definition |
|---|---|
| 0b1010_1111 | Pending Primary Role |
| 0b1001_1111 | Pending Secondary Role |
| 0b1010_1010 | Primary Role |
| 0b1100_1100 | Secondary Role |
| Other value, bad frame, or no signal | Partner is not alive |

The payload 604 in two consecutive frames can be received and compared to identify a change in the status of a partner device. A change in payload values could cause an interrupt 406a-406b to be asserted. Also, a lack of a signal or the receipt of one or more bad frames could cause the interrupt 406a-406b to be asserted.

Although FIGURE 6 illustrates one example of a communication protocol used by a hardware assist mechanism for alive detection, various changes may be made to FIGURE 6. For example, any other suitable communication protocol could be used by the hardware assist devices 212a-212b.

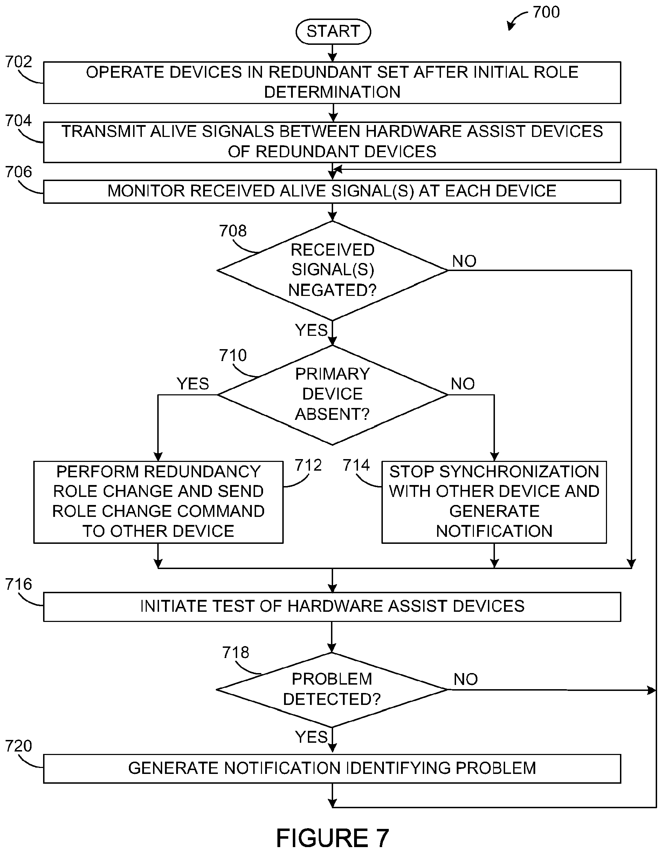

FIGURE 7 illustrates an example method 700 for alive detection using a hardware assist mechanism according to this disclosure. For ease of explanation, the method 700 is described with respect to the hardware assist devices 212a-212b implemented as shown in FIGURES 4 and 5. However, the method 700 could be used with any other suitable devices and in any suitable system.

As shown in FIGURE 7, devices in a redundant set are operated after initial role determinations at step 702. This could include, for example, the devices 202a-202b operating to select initial operating modes, such as one device in primary mode and another device in secondary mode. This could also include the devices 202a-202b performing control operations in an industrial process control and automation system. This could further include the devices 202a-202b synchronizing with one another so that the secondary device can enter the primary mode if and when needed.

Alive signals are generated and transmitted between hardware assist devices of the redundant devices at step 704. This could include, for example, one or more transmitters 214a-214b, 218a-218b in each of the hardware assist devices 212a-212b transmitting one or more alive signals over one or more communication links 222 and 224. This could also include the watchdog timers 408a-408b being reset periodically in order to allow the drivers 410a-410b (or 410a-410d) to pass the alive signals over the communication links 222 and 224. One or more alive signals are received and monitored at each device at step 706. This could include, for example, one or more receivers 216a-216b, 220a-220b in each of the hardware assist devices 212a-212b receiving one or more alive signals over one or more communication links 222 and 224.

A determination is made at each device whether the received alive signal or signals are lost or otherwise negated at step 708. This could include, for example, an FPGA in each hardware assist device 212a-212b determining whether one or more alive signals are no longer being received or contain invalid values or bad frames. This could occur repeatedly at a defined interval (such as every 10 milliseconds) or at any other suitable times. If the received alive signals are lost or otherwise negated at one device, it may be indicative of the other device suffering from a fault or otherwise becoming absent. In that case, a determination is made whether the device that is absent is in the primary mode at step 710.

If the absent device is a primary device, a redundancy role change occurs in the secondary device at step 712. This could include, for example, the processing device 404a or 404b in the secondary device causing the secondary device to enter the primary mode. If the device represents a process controller, the mode change could cause a secondary process controller to enter the primary mode and begin actively controlling one or more industrial processes. This could also include the secondary device blindly sending a role change command to the other device in step 712. If the loss of the alive signal(s) is due to a communication fault between the devices 202a-202b and not due to a fault in the absent device, the absent device may still be functioning, and the role change command can cause the absent device to switch to the secondary mode.

If the absent device is not a primary device and is therefore a secondary device, synchronization with the absent device stops at step 714. This could include, for example, the processing device 404a or 404b in the primary device causing the primary device to stop sending synchronization information to the absent secondary device. This could also include the primary device sending at least one alarm, warning, or other notification in step 714. The notification(s) could inform appropriate personnel, a maintenance system, or other destination(s) that redundancy is no longer available with the primary device.

At specified intervals (such as every five minutes) or at other times, testing of the hardware assist devices is initiated and occurs at step 716. This could include, for example, the hardware assist device 212a-212b of one device 202a-202b intentionally stopping the transmission of the alive signal(s) to the hardware assist device 212a-212b of the other device 202a-202b on one (but not all) communication links 222-224. This could also include the other device 202a-202b determining whether the hardware assist device 212a-212b of the other device 202a-202b accurately detects the lack of the alive signal(s). This could further include the other device 202a-202b determining whether the hardware assist device 212a-212b of the other device 202a-202b continues to accurately detect the alive signal(s) sent over other communication link(s). If a problem is detected in the test at step 718, a notification identifying the problem is generated at step 720. This could include, for example, the device 202a-202b at which the error is noted sending at least one alarm, warning, or other notification. The notification(s) could inform appropriate personnel, a maintenance system, or other destination(s) that accurate alive detection may no longer be possible with the redundant devices.

Although FIGURE 7 illustrates one example of a method 700 for alive detection using a hardware assist mechanism, various changes may be made to FIGURE 7. For example, while shown as a series of steps, various steps in FIGURE 7 could overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure.

## Claims

1. An apparatus (202a, 202b) comprising:
a first hardware assist device (212a, 212b) comprising:
at least one transmitter (214a, 214b, 218a, 218b) configured to transmit at least one first signal (302, 304, 306, 308, 352, 354, 356, 358) to a second hardware assist device (212b, 212a) of a redundant second apparatus (202b, 202a), the at least one first signal indicating to the second hardware assist device that the apparatus is functional, wherein the hardware assist devices (212) denote hardware components used to facilitate faster identification of the loss of a redundant device; at least one receiver (216a, 216b, 220a, 220b) configured to receive at least one second signal (302, 304, 306, 308, 352, 354, 356, 358) from the second hardware assist device, the at least one second signal indicating to the first hardware assist device that the second apparatus is functional; and
a timer (408a, 408b) configured to control a driver (410a, 410b, 410c, 410d) in order to block transmission of the at least one first signal in response to a fault associated with the apparatus; and
at least one processing device (404a, 404b) configured to perform one or more actions in response to a loss of the at least one second signal from the second apparatus, wherein the one or more actions comprise:
when the apparatus is operating in a secondary mode and the second apparatus is operating in a primary mode, switching the apparatus to operate in the primary mode and sending a mode change command to the second apparatus; and
when the apparatus is operating in the primary mode and the second apparatus is operating in the secondary mode, stopping a synchronization of the apparatus and the second apparatus.

2. The apparatus of Claim 1, wherein:
the at least one processing device is configured to repeatedly reset the timer; and
in response to the fault associated with the apparatus, the at least one processing device stops resetting the timer so that the timer is able to time out and cause the driver to block the transmission of the at least one first signal.

3. The apparatus of Claim 1, wherein the first hardware assist device comprises:
multiple transmitters (214a-214b, 218a-218b) configured to transmit multiple first signals to the second hardware assist device over redundant communication paths 222-224); and
multiple receivers (216a-216b, 220a-220b) configured to receive multiple second signals from the second hardware assist device over the redundant communication paths.

4. The apparatus of Claim 3, further comprising logic (407a, 407b) configured to:
assert an interrupt (406a, 406b) for the at least one processing device in response to no valid second signals being received from the second hardware assist device; and
refrain from asserting the interrupt in response to at least one valid second signal being received from the second hardware assist device.

5. The apparatus of Claim 3, wherein, during a test, the first hardware assist device is configured to stop transmitting at least one but not all of the first signals in order to verify whether the second hardware assist device detects a loss of the at least one first signal on at least one but not all of the redundant communication paths.

6. A system comprising:
first and second devices (202a-202b) forming at least part of a redundant set of devices, each device comprising the apparatus of any of Claims 1 through 6.

7. A method comprising:
at a first hardware assist device (212a, 212b) associated with a first apparatus (202a, 202b) :
transmitting (704) at least one first signal (302, 304, 306, 308, 352, 354, 356, 358) to a second hardware assist device (212b, 212a) of a redundant second apparatus (202b, 202a), the at least one first signal indicating to the second hardware assist device that the first apparatus is functional;
receiving (706) at least one second signal (302, 304, 306, 308, 352, 354, 356, 358) from the second hardware assist device, the at least one second signal indicating to the first hardware assist device that the second apparatus is functional, wherein the hardware assist devices (212) denote hardware components used to facilitate faster identification of the loss of a redundant device; and
controlling a driver (410a, 410b, 410c, 410d) in order to block transmission of the at least one first signal in response to a fault associated with the first apparatus; and
performing (712, 714) one or more first actions in response to a loss of the at least one second signal from the second apparatus, wherein the one or more first actions comprise:
when the first apparatus is operating in a secondary mode and the second apparatus is operating in a primary mode, switching the first apparatus to operate in the primary mode and sending a mode change command to the second apparatus; and
when the first apparatus is operating in the primary mode and the second apparatus is operating in the secondary mode, stopping a synchronization of the first apparatus and the second apparatus.

8. The method of Claim 7, further comprising:
at the second hardware assist device:
transmitting (704) the at least one second signal to the first hardware assist device;
receiving (706) the at least one first signal from the first hardware assist device; and
controlling a second driver (410a, 410b, 410c, 410d) in order to block transmission of the at least one second signal in response to a fault associated with the second apparatus; and
performing (712, 714) one or more second actions in response to a loss of the at least one first signal from the first apparatus.

9. The method of Claim 7, further comprising:
creating a specified pattern (360, 362, 364, 366) in the at least one first signal, the specified pattern indicating an operating mode in which the first apparatus in currently operating or preparing to operate.

## Patentansprüche

1. Apparat (202a, 202b), umfassend:
eine erste Hardware-Unterstützungsvorrichtung (212a, 212b), umfassend:
mindestens einen Sender (214a, 214b, 218a, 218b), der konfiguriert ist, um mindestens ein erstes Signal (302, 304, 306, 308, 352, 354, 356, 358) an eine zweite Hardware-Unterstützungsvorrichtung (212b, 212a) eines redundanten zweiten Apparats (202b, 202a) zu übertragen, wobei das mindestens eine erste Signal der zweiten Hardware-Unterstützungsvorrichtung anzeigt, dass der Apparat funktionsfähig ist, wobei die Hardware-Unterstützungsvorrichtung (212) Hardware-Komponenten bezeichnet, die verwendet werden, um eine schnellere Identifizierung des Verlusts einer redundanten Vorrichtung zu ermöglichen; mindestens einen Empfänger (216a, 216b, 220a, 220b), der konfiguriert ist, um mindestens ein zweites Signal (302, 304, 306, 308, 352, 354, 356, 358) von der zweiten Hardware-Unterstützungsvorrichtung zu empfangen, wobei das mindestens eine zweite Signal der ersten Hardware-Unterstützungsvorrichtung anzeigt, dass der zweite Apparat funktionsfähig ist; und
einen Zeitgeber (408a, 408b), der konfiguriert ist, um einen Treiber (410a, 410b, 410c, 410d) zu steuern, um die Übertragung des mindestens einen ersten Signals als Reaktion auf einen mit dem Apparat in Zusammenhang stehenden Fehler zu blockieren; und
mindestens eine Verarbeitungsvorrichtung (404a, 404b), die konfiguriert ist, um eine oder mehrere Aktionen als Reaktion auf einen Verlust des mindestens einen zweiten Signals von dem zweiten Apparat durchzuführen, wobei die eine oder mehreren Aktionen umfassen:
wenn der Apparat in einem Sekundärmodus in Betrieb ist und der zweite Apparat in einem Primärmodus in Betrieb ist, Umschalten des Apparats auf Betrieb im Primärmodus und Senden eines Modusänderungsbefehls an den zweiten Apparat; und
wenn der Apparat im Primärmodus in Betrieb ist und der zweite Apparat im Sekundärmodus in Betrieb ist, Stoppen einer Synchronisation des Apparats und des zweiten Apparats.

2. Apparat nach Anspruch 1, wobei:
die mindestens eine Verarbeitungsvorrichtung konfiguriert ist, um den Zeitgeber wiederholt zurückzusetzen; und
als Reaktion auf den mit dem Apparat in Zusammenhang stehenden Fehler die mindestens eine Verarbeitungsvorrichtung das Zurücksetzen des Zeitgebers stoppt, sodass der Zeitgeber in der Lage ist, abzulaufen und den Treiber zu veranlassen, die Übertragung des mindestens einen ersten Signals zu blockieren.

3. Apparat nach Anspruch 1, wobei die erste Hardware-Unterstützungsvorrichtung umfasst:
mehrere Sender (214a-214b, 218a-218b), die konfiguriert sind, um mehrere erste Signale über redundante Kommunikationspfade 222-224) an die zweite Hardware-Unterstützungsvorrichtung zu übertragen; und
mehrere Empfänger (216a-216b, 220a-220b), die konfiguriert sind, um mehrere zweite Signale von der zweiten Hardware-Unterstützungsvorrichtung über die redundanten Kommunikationspfade zu empfangen.

4. Apparat nach Anspruch 3, der ferner Logik (407a, 407b) umfasst, die konfiguriert ist, um:
eine Unterbrechung (406a, 406b) für die mindestens eine Verarbeitungsvorrichtung als Reaktion darauf zu bestätigen, dass keine gültigen zweiten Signale von der zweiten Hardware-Unterstützungsvorrichtung empfangen werden; und
davon abzusehen, die Unterbrechung als Reaktion darauf zu bestätigen, dass mindestens ein gültiges zweites Signal von der zweiten Hardware-Unterstützungsvorrichtung empfangen wird.

5. Apparat nach Anspruch 3, wobei während eines Tests die erste Hardware-Unterstützungsvorrichtung konfiguriert ist, um das Übertragen von mindestens einem, aber nicht allen der ersten Signale zu stoppen, um zu verifizieren, ob die zweite Hardware-Unterstützungsvorrichtung einen Verlust des mindestens einen ersten Signals auf mindestens einem, aber nicht allen der redundanten Kommunikationspfade nachweist.

6. System, umfassend:
eine erste und zweite Vorrichtung (202a-202b), die mindestens einen Teil eines redundanten Satzes von Vorrichtungen bilden, wobei jede Vorrichtung den Apparat nach einem der Ansprüche 1 bis 6 umfasst.

7. Verfahren, umfassend:
bei einer ersten Hardware-Unterstützungsvorrichtung (212a, 212b), die einem ersten Apparat (202a, 202b) zugeordnet ist:
Übertragen (704) mindestens eines ersten Signals (302, 304, 306, 308, 352, 354, 356, 358) an eine zweite Hardware-Unterstützungsvorrichtung (212b, 212a) eines redundanten zweiten Apparats (202b, 202a), wobei das mindestens eine erste Signal der zweiten Hardware-Unterstützungsvorrichtung anzeigt, dass der erste Apparat funktionsfähig ist;
Empfangen (706) mindestens eines zweiten Signals (302, 304, 306, 308, 352, 354, 356, 358) von der zweiten Hardware-Unterstützungsvorrichtung, wobei das mindestens eine zweite Signal der ersten Hardware-Unterstützungsvorrichtung anzeigt, dass der zweite Apparat funktionsfähig ist, wobei die Hardware-Unterstützungsvorrichtungen (212) Hardware-Komponenten bezeichnen, die verwendet werden, um eine schnellere Identifizierung des Verlustes einer redundanten Vorrichtung zu ermöglichen; und
Steuern eines Treibers (410a, 410b, 410c, 410d), um die Übertragung des mindestens einen ersten Signals als Reaktion auf einen mit dem ersten Apparat in Zusammenhang stehenden Fehler zu blockieren; und
Durchführen (712, 714) einer oder mehrerer erster Aktionen als Reaktion auf einen Verlust des mindestens einen zweiten Signals von dem zweiten Apparat, wobei die eine oder mehreren ersten Aktionen umfassen:
wenn der erste Apparat in einem Sekundärmodus in Betrieb ist und der zweite Apparat in einem Primärmodus in Betrieb ist, Umschalten des ersten Apparats auf den Betrieb im Primärmodus und Senden eines Modusänderungsbefehls an den zweiten Apparat; und
wenn der erste Apparat im Primärmodus in Betrieb ist und der zweite Apparat im Sekundärmodus in Betrieb ist, Stoppen einer Synchronisation des ersten Apparats und des zweiten Apparats.

8. Verfahren nach Anspruch 7, ferner umfassend:
bei der zweiten Hardware-Unterstützungsvorrichtung:
Übertragen (704) des mindestens einen zweiten Signals an die erste Hardware-Unterstützungsvorrichtung;
Empfangen (706) des mindestens einen ersten Signals von der ersten Hardware-Unterstützungsvorrichtung; und
Steuern eines zweiten Treibers (410a, 410b, 410c, 410d), um die Übertragung des mindestens einen zweiten Signals als Reaktion auf einen mit dem zweiten Apparat in Zusammenhang stehenden Fehler zu blockieren; und
Durchführen (712, 714) einer oder mehrerer zweiter Aktionen als Reaktion auf einen Verlust des mindestens einen ersten Signals von dem ersten Apparat.

9. Verfahren nach Anspruch 7, ferner umfassend:
Erzeugen eines spezifizierten Musters (360, 362, 364, 366) in dem mindestens einen ersten Signal, wobei das spezifizierte Muster einen Betriebsmodus anzeigt, in dem der erste Apparat gegenwärtig in Betrieb ist oder den Betrieb darin vorbereitet.

## Revendications

1. Appareil (202a, 202b) comprenant :
un premier dispositif d'assistance par matériel (212a, 212b) comprenant :
au moins un émetteur (214a, 214b, 218a, 218b) configuré pour transmettre au moins un premier signal (302, 304, 306, 308, 352, 354, 356, 358) à un second dispositif d'assistance par matériel (212b, 212a) d'un second appareil redondant (202b, 202a), le au moins un premier signal indiquant au second dispositif d'assistance par matériel que l'appareil est fonctionnel, dans lequel les dispositifs d'assistance par matériel (212) désignent des composants matériels utilisés pour faciliter une identification plus rapide de la perte d'un dispositif redondant ; au moins un récepteur (216a, 216b, 220a, 220b) configuré pour recevoir au moins un second signal (302, 304, 306, 308, 352, 354, 356, 358) en provenance du second dispositif d'assistance par matériel, le au moins un second signal indiquant au premier dispositif d'assistance par matériel que le second appareil est fonctionnel ; et
un temporisateur (408a, 408b) conçu pour commander un pilote (410a, 410b, 410c, 410d) afin de bloquer une transmission du au moins un premier signal en réponse à un défaut associé à l'appareil ; et
au moins un dispositif de traitement (404a, 404b) configuré pour effectuer une ou plusieurs actions en réponse à une perte du au moins un second signal provenant du second appareil, dans lequel la ou les actions comprennent :
lorsque l'appareil fonctionne dans un mode secondaire et que le second appareil fonctionne dans un mode primaire, la commutation de l'appareil pour qu'il fonctionne dans le mode primaire et l'envoi d'une instruction de changement de mode au second appareil ; et
lorsque l'appareil fonctionne dans le mode primaire et que le second appareil fonctionne dans le mode secondaire, l'arrêt d'une synchronisation de l'appareil et du second appareil.

2. Appareil selon la revendication 1, dans lequel :
le au moins un dispositif de traitement est configuré pour réinitialiser le temporisateur à plusieurs reprises ; et
en réponse au défaut associé à l'appareil, le au moins un dispositif de traitement arrête de réinitialiser le temporisateur, de sorte que le temporisateur puisse expirer et amener le pilote à bloquer la transmission du au moins un premier signal.

3. Appareil selon la revendication 1, dans lequel le premier dispositif d'assistance par matériel comprend :
plusieurs émetteurs (214a-214b, 218a-218b) configurés pour transmettre plusieurs premiers signaux au second dispositif d'assistance par matériel sur des chemins de communication redondants 222-224) ; et
plusieurs récepteurs (216a-216b, 220a-220b) configurés pour recevoir plusieurs seconds signaux en provenance du second dispositif d'assistance par matériel sur les chemins de communication redondants.

4. Appareil selon la revendication 3, comprenant en outre une logique (407a, 407b) configurée pour :
affirmer une interruption (406a, 406b) pour le au moins un dispositif de traitement en réponse à l'absence de seconds signaux valides reçus en provenance du second dispositif d'assistance par matériel ; et
s'abstenir de maintenir l'interruption en réponse à au moins un second signal valide reçu en provenance du second dispositif d'assistance par matériel.

5. Appareil selon la revendication 3 dans lequel, lors d'un test, le premier dispositif d'assistance par matériel est configuré pour cesser de transmettre au moins un, mais pas tous les premiers signaux afin de vérifier si le second dispositif d'assistance par matériel détecte une perte d'au moins une premier signal sur au moins un, mais pas tous les chemins de communication redondants.

6. Système comprenant :
des premier et second dispositifs (202a-202b) formant au moins une partie d'un ensemble redondant de dispositifs, chaque dispositif comprenant l'appareil selon l'une quelconque des revendications 1 à 6.

7. Procédé comprenant :
au niveau d'un premier dispositif d'assistance par matériel (212a, 212b) associé à un premier appareil (202a, 202b) :
la transmission (704) d'au moins un premier signal (302, 304, 306, 308, 352, 354, 356, 358) à un second dispositif d'assistance par matériel (212b, 212a) d'un second appareil redondant (202b, 202a), le au moins un premier signal indiquant au second dispositif d'assistance par matériel que le premier appareil est fonctionnel ;
la réception (706) d'au moins un second signal (302, 304, 306, 308, 352, 354, 356, 358) en provenance du second dispositif d'assistance par matériel, le au moins un second signal indiquant au premier dispositif d'assistance par matériel que le second appareil est fonctionnel, dans lequel les dispositifs d'assistance par matériel (212) désignent des composants matériels utilisés pour faciliter une identification plus rapide de la perte d'un dispositif redondant ; et
la commande d'un pilote (410a, 410b, 410c, 410d) afin de bloquer la transmission du au moins un premier signal en réponse à un défaut associé au premier appareil ; et
la réalisation (712, 714) d'une ou plusieurs premières actions en réponse à une perte du au moins un second signal provenant du second appareil, dans lequel la ou les premières actions comprennent :
lorsque le premier appareil fonctionne dans un mode secondaire et que le second appareil fonctionne dans un mode primaire, la commutation du premier appareil pour qu'il fonctionne dans le mode primaire et l'envoi d'une instruction de changement de mode au second appareil ; et
lorsque le premier appareil fonctionne dans le mode primaire et que le second appareil fonctionne dans le mode secondaire, l'arrêt d'une synchronisation du premier appareil et du second appareil.

8. Procédé selon la revendication 7, comprenant en outre :
au niveau du second dispositif d'assistance par matériel :
la transmission (704) du au moins un second signal au premier dispositif d'assistance par matériel ;
la réception (706) du au moins un premier signal provenant du premier dispositif d'assistance par matériel ; et
la commande d'un second pilote (410a, 410b, 410c, 410d) afin de bloquer la transmission du au moins un second signal en réponse à un défaut associé au second appareil ; et
la réalisation (712, 714) d'une ou plusieurs secondes actions en réponse à une perte du au moins un premier signal provenant du premier appareil.

9. Procédé selon la revendication 7, comprenant en outre :
la création d'un motif spécifié (360, 362, 364, 366) dans le au moins un premier signal, le motif spécifié indiquant un mode de fonctionnement dans lequel le premier appareil fonctionne actuellement ou se prépare à fonctionner.
